# EUROPÄISCHE PATENTSCHRIFT

(11) **EP 3 369 996 B1**
(45) Veröffentlichungstag und Bekanntmachung des Hinweises auf die Patenterteilung: **14.04.2021**
(21) Anmeldenummer: 18159207.2
(22) Anmeldetag: 28.02.2018
(51) Int. Cl.: F23R 3/00

(54) **BRENNKAMMERSCHINDEL-ANORDNUNG EINER GASTURBINE**
COMBUSTION CHAMBER SHINGLE ARRANGEMENT OF A GAS TURBINE
DISPOSITIF FORMANT BARDEAU DE LA CHAMBRE DE COMBUSTION D'UNE TURBINE À GAZ

(30) Priorität: 01.03.2017 DE 102017203326
(43) Veröffentlichungstag der Anmeldung: 05.09.2018
(73) Patentinhaber: Rolls-Royce Deutschland Ltd & Co KG, 15827 Blankenfelde-Mahlow (DE)
(72) Erfinder: Clemen, Carsten, 15827 Blankenfelde-Mahlow (DE); Ebel, Michael, 15827 Blankenfelde-Mahlow (DE); Penz, Stefan, 15827 Blankenfelde-Mahlow (DE); Heinze, Kay, 15827 Blankenfelde-Mahlow (DE)

(56) Entgegenhaltungen:
- EP-A1- 2 730 843
- EP-A1- 2 918 915
- US-A1- 2014 250 894

## Beschreibung

Die vorliegende Erfindung betrifft eine Brennkammerschindel-Anordnung einer Gasturbine, insbesondere Fluggasturbine, mit verbessertem Wärmeverhalten.

Brennkammerschindel-Anordnungen für Gasturbinen sind aus dem Stand der Technik in unterschiedlichen Ausgestaltungen bekannt. Die Brennkammerschindel-Anordnungen werden üblicherweise an einer Brennkammeraußenwand befestigt. Hierzu umfasst die Brennkammerschindel-Anordnung neben der Brennkammerschindel auch eine Befestigungseinrichtung in Form eines Gewindebolzens. Wie aus der DE 102014222320 A1 bekannt, werden derartige Gewindebolzen an die Rückseite der Schindel mittels einer Schweißverbindung fixiert oder integral als Guss-Bauteil vorgesehen. Die bekannten Brennkammerschindeln weisen ferner eine hohe Anzahl (oftmals mehrere Tausend) von Effusionskühllöchern auf, welche dazu dienen, die Brennkammerschindel gegenüber den hohen Temperaturen in der Brennkammer der Gasturbine zu kühlen. Auch weisen Brennkammerschindeln üblicherweise sogenannte Mischluftlöcher auf, welche dazu dienen, Luft aus dem die Brennkammer außen umgebenden Raum in die Brennkammer zum Zwecke des Abkühlens und Abmagerns der Verbrennung zu zuleiten. Die Vielzahl von Effusionskühllöchern stellt dabei sicher, dass die Temperatur an der Brennkammschindel nicht zu hoch wird. Die Brennkammerschindeln werden üblicherweise mittels Muttern an den Gewindebolzen an der Brennkammeraußenwand befestigt. Es wurde nun festgestellt, dass während des Betriebes immer wieder Probleme mit dem sogenannten Kriechen des Materials auftreten, was zu einem Versagen des Gewindebolzens führen kann. Da der Fuß des Gewindebolzens, mit welchem der Gewindebolzen an der Brennkammerschindel angeschweißt ist, nicht gekühlt werden kann, können am Gewindebolzen sehr hohe Temperaturen auftreten, welche die oben genannten Probleme hervorrufen können.

Die US 2014/0250894 A1 offenbart eine Brennkammerschindelanordnung bestehend aus einer Brennkammerschindel und einer davon über Abstandshalter beabstandeten Wand. Zwischen den Abstandhaltern und zwischen der Brennkammerschindel und der davon beabstandeten Wand sind Kanäle ausgebildet. Die Anordnung ist an einer Brennkammerwand befestigt.

Die EP 2 918 915 A1 offenbart eine Brennkammerschindelanordnung mit einer an einer Brennkammerschindel angeordneten Plattform und in eine Ausnehmung der Plattform einschiebbaren Gewindebolzen zur Befestigung der Brennkammerschindel an einer Brennkammerwand. Die EP 2 730 843 A1 offenbart zusätzlich dazu noch eine Durchgangsöffnung im Gewindebolzen, um eine Kühlung des Gewindebolzens zu gewährleisten.

Es ist daher Aufgabe der vorliegenden Erfindung, eine Brennkammerschindel-Anordnung bereitzustellen, welche bei einfachem Aufbau und einfacher, kostengünstiger Herstellbarkeit eine verbesserte Kühlung der Brennkammerschindel-Anordnung ermöglicht und insbesondere das Kriechen des Materials im Bereich eines Gewindebolzens vermeiden kann.

Diese Aufgabe wird durch eine Brennkammerschindel-Anordnung gemäß den Merkmalen des Anspruchs 1 gelöst. Die Unteransprüche zeigen bevorzugte Weiterbildungen der Erfindung.

Die erfindungsgemäße Brennkammerschindel-Anordnung mit den Merkmalen des Anspruchs 1 weist den Vorteil auf, dass eine Brennkammerschindel auch unterhalb des Bereichs eines Gewindebolzens gekühlt werden kann. Hiermit wird das Kriechen des Gewindebolzens und damit ein mögliches Lösen der Brennkammerschindel-Anordnung von einer Brennkammeraußenwand oder dergleichen vermieden. Dies wird erfindungsgemäß dadurch erreicht, dass die Brennkammerschindel-Anordnung eine Brennkammerschindel sowie wenigstens einen Gewindebolzen umfasst. Der Gewindebolzen ist eingerichtet, um die Brennkammerschindel zu befestigen. Die Befestigung erfolgt bevorzugterweise mittels einer Mutter. Ferner umfasst die Brennkammerschindel-Anordnung einen Grundkörper, welcher den Gewindebolzen mit der Brennkammerschindel verbindet. Der Grundkörper umfasst eine Plattform, an welcher der Bolzen angeordnet ist und ein Verbindungsbereich, welcher die Plattform mit der Brennkammerschindel verbindet. Hierbei ist ein Hohlraum zwischen der Plattform und der Brennkammerschindel ausgebildet. Der Bolzen ist an der Plattform des Grundkörpers angeordnet, wobei der Hohlraum zwischen der Plattform und der Brennkammerschindel bewirkt, dass die Temperaturen direkt am Fuß des Gewindebolzens nicht zu hoch werden.

Vorzugsweise umfasst die Brennkammerschindel eine Vielzahl von Effusionskühllöchern, wobei wenigstens ein Effusionskühlloch, vorzugsweise eine Vielzahl von Effusionskühllöchern, in einem Bereich der Brennkammerschindel unterhalb des Grundkörpers vorgesehen sind. Weiterhin ist der Hohlraum zwischen dem Grundkörper und der Brennkammerschindel mittels wenigstens einer Durchgangsöffnung, vorzugsweise einer Vielzahl von Durchgangsöffnungen, mit einer rückwärtigen Umgebung der Brennkammerschindel verbunden. Hierdurch wird eine Kühlungsströmung unterhalb der Plattform durch die Durchgangsöffnung im Verbindungsbereich zu dem wenigstens einen Effusionskühlloch unterhalb des Grundkörpers erreicht. Hierdurch wird eine noch bessere Kühlung der Brennkammerschindel ermöglicht. Insbesondere kann dadurch eine gesamte Fläche der Brennkammerschindel, auch die Bereiche, an welchen die Gewindebolzen angeordnet sind, gekühlt werden. Somit wird eine homogene Temperaturverteilung an der Brennkammerschindel erreicht, wodurch eine Lebensdauer der Brennkammerschindel-Anordnung signifikant verlängert wird.

Besonders bevorzugt ist ein Querschnitt der wenigstens einen Durchgangsöffnung im Grundkörper zur Verbindung mit dem Hohlraum, der größer oder gleich einer Summe aller Querschnitte der Effusionskühllöcher im Bereich unterhalb des Grundkörpers ist. Hierdurch wird sichergestellt, dass keine Drosselung des Kühlluftstroms unterhalb des Grundkörpers auftritt.

Weiter bevorzugt sind die Brennkammerschindel, der Grundkörper und der Gewindebolzen einstückig aus dem gleichen Material hergestellt. Hierdurch müssen keine Schweißverbindungen zwischen den Bauteilen vorgesehen werden und entsprechend können keine Gefügeänderungen oder dergleichen auftreten, welche eventuell nachteilig für eine Dauerhaltbarkeit der Brennkammerschindel-Anordnung sein können. Besonders bevorzugt ist die Brennkammerschindel-Anordnung dabei ein additiv hergestelltes Bauteil. Gemäß einer weiteren bevorzugten Ausgestaltung der vorliegenden Erfindung weist die Brennkammerschindel einen Schindelrand, insbesondere einen geschlossenen umlaufenden Schindelrand an einer Brennkammerrückseite, d. h. von der Brennkammer abgewandten Seite, auf. Der Schindelrand weist eine gleiche Höhe wie eine Höhe des Grundkörpers von der Rückseite der Brennkammerschindel auf. Wenn der Schindelrand und der Grundkörper die gleiche Höhe haben, ist es möglich, dass der Grundkörper im montierten Zustand auch das Befestigungsbauteil, insbesondere eine Brennkammeraußenwand, kontaktiert. Hierdurch kann eine Entkopplung der Schraubverbindungen mittels des Gewindebolzens von dem Verbindungsbereich der Verbindungen der Plattform mit der Brennkammerschindel erreicht werden.

Weiter bevorzugt weist der Gewindebolzen eine Durchgangsöffnung auf, welche bis zum Hohlraum reicht. Die Durchgangsöffnung ist vorzugsweise in Axialrichtung des Gewindebolzens vorgesehen und liegt bevorzugt mittig in diesem. Somit kann auch Kühlluft durch den Gewindebolzen bis in den Hohlraum unterhalb der Plattform zugeführt werden.

Besonders bevorzugt ist der Hohlraum von mehreren Seiten zugänglich. Hierdurch wird eine Kühlung von allen Verbindungsbereichen des Grundkörpers ermöglicht. Eine besonders gute Kühlung des Gewindebolzens wird möglich, wenn eine Kontaktfläche des Bolzens an der Plattform kleiner ist als eine Gesamtfläche der Plattform. Vorzugsweise ist die Gesamtfläche der Plattform mindestens doppelt so groß wie die Kontaktfläche des Gewindebolzens, wobei sich bevorzugt die Größe der Kontaktfläche aus dem zylindrischen Rundkörper des Bolzens ergibt.

Es sei angemerkt, dass eine geometrische Form der Plattform beliebig sein kann, beispielsweise ein Viereck, ein Quadrat, ein Kreis, ein Oval oder auch ein Dreieck.

Eine besonders effektive Kühlung wird erreicht, wenn zusätzlich Kühlungsöffnungen im Verbindungsbereich zwischen der Plattform und der Brennkammerschindel vorgesehen sind. D. h. der Verbindungsbereich, welcher die Verbindung zwischen der Rückseite der Brennkammerschindel und der Plattform herstellt, weist ebenfalls Kühlungsöffnungen auf. Hierbei kann eine größere Kühlungsöffnung vorgesehen sein oder es ist eine Vielzahl von sehr kleinen Kühlungsöffnungen vorgesehen.

Die Form des Grundkörpers ist vorzugsweise ähnlich einer Brücke, d. h. mit zwei Pfeilern, welche mittels der Plattform miteinander verbunden werden. Die Pfeiler weisen dabei vorzugsweise die gleiche Breite wie die Plattform auf.

Ferner betrifft die vorliegende Erfindung eine Gasturbine, insbesondere eine Fluggasturbine, umfassend wenigstens eine erfindungsgemäße Brennkammerschindel-Anordnung.

Nachfolgend werden bevorzugte Ausführungsbeispiele der Erfindung unter Bezugnahme auf die begleitende Zeichnung im Detail beschrieben. In der Zeichnung werden gleiche bzw. funktional gleiche Teile mit den gleichen Bezugszeichen bezeichnet. In der Zeichnung ist:
- Fig. 1: ein Gasturbinentriebwerk mit einer erfindungsgemäßen Brennkammerschindel-Anordnung,
- Fig. 2: eine schematische Schnittansicht einer Brennkammer einer Gasturbine von Fig. 1,
- Fig. 3: eine schematische, vergrößerte Darstellung einer Brennkammerschindel-Anordnung von Fig. 2 im nichtmontierten Zustand,
- Fig. 4: eine schematische, vergrößerte Darstellung einer Brennkammerschindel-Anordnung von Fig. 2 im montierten Zustand,
- Fig. 5: eine schematische, vergrößerte Teilschnittdarstellung einer Brennkammerschindel-Anordnung,
- Fig. 6: eine schematische Schnittansicht einer Brennkammerschindel-Anordnung,
- Fig. 7: eine schematische Schnittansicht einer Brennkammerschindel-Anordnung,
- Fig. 8: eine schematische Schnittansicht einer Brennkammerschindel-Anordnung,
- Fig. 9: eine schematische Schnittansicht einer Brennkammerschindel-Anordnung,
- Fig. 10: eine schematische Schnittansicht einer Brennkammerschindel-Anordnung,
- Fig. 11: eine schematische Schnittansicht einer Brennkammerschindel-Anordnung,
- Fig. 12: eine schematische Schnittansicht einer Brennkammerschindel-Anordnung,
- Fig. 13: eine schematische Schnittansicht einer Brennkammerschindel-Anordnung gemäß einem Ausführungsbeispiel der Erfindung, und
- Fig. 14: eine schematische Draufsicht einer Rückseite einer Brennkammerschindel-Anordnung mit verschiedenen geometrischen Ausgestaltungen und Anordnungspositionen auf der Brennkammerschindel.

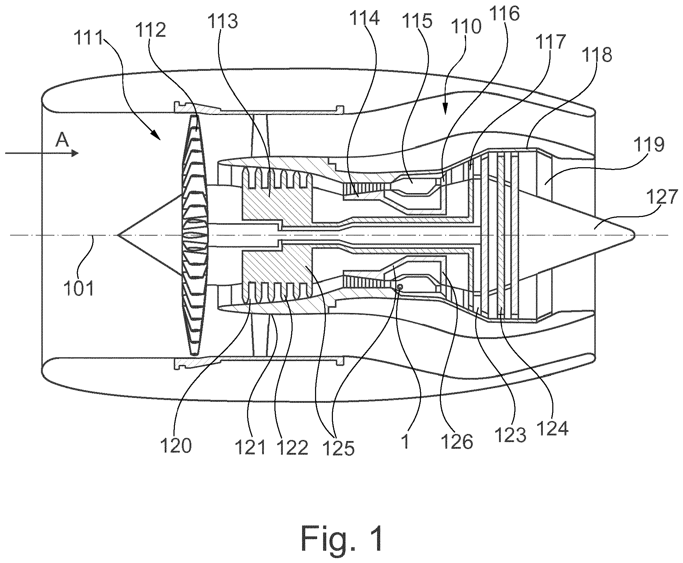

Ein Gasturbinentriebwerk 110 gemäß Fig. 1 ist ein allgemein dargestelltes Beispiel einer Turbomaschine, bei der die Erfindung Anwendung finden kann. Das Gasturbinentriebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 beziehungsweise der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101. Das Gasturbinen-Triebwerk ist nicht notwendigerweise eine Drei-Wellen-Konstruktion, sondern ist bevorzugt ein Zwei-Wellen-Triebwerk.

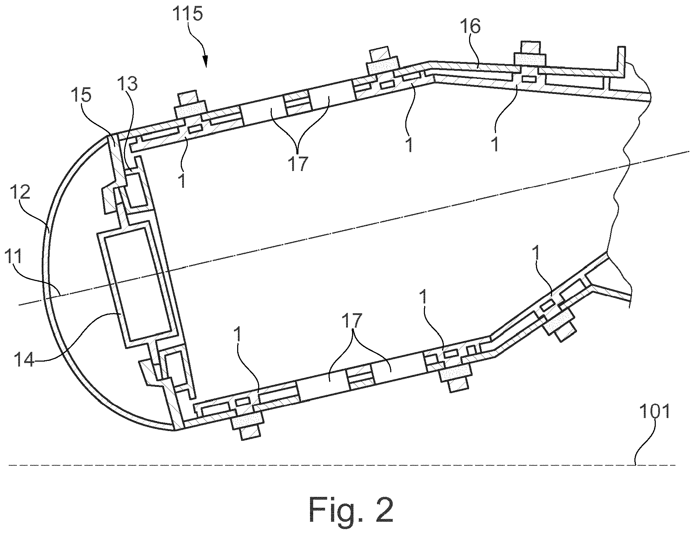

In den Figuren 2 bis 4 ist eine Brennkammerschindel-Anordnung 1 und eine Brennkammer 115 mit einer derartigen Brennkammerschindel-Anordnung im Detail gezeigt.

Fig. 2 zeigt einen Längsschnitt durch die Brennkammer. Dabei ist eine Brennkammer 115 mit einer Mittelachse 101 dargestellt, welche einen Brennkammerkopf 12 und ein Hitzeschild 13 und die dazugehörende Brennerachse 11 umfasst. Am Hitzeschild 13 ist eine Brennerdichtung 14 vorgesehen. Die Brennerdichtung 14 ist an einer Grundplatte 15 angeordnet. Ein an der Brennerdichtung abgedichteter Brenner, über welchen ein Brennstoff in die Brennkammer 115 zugeführt wird, ist nicht gezeigt.

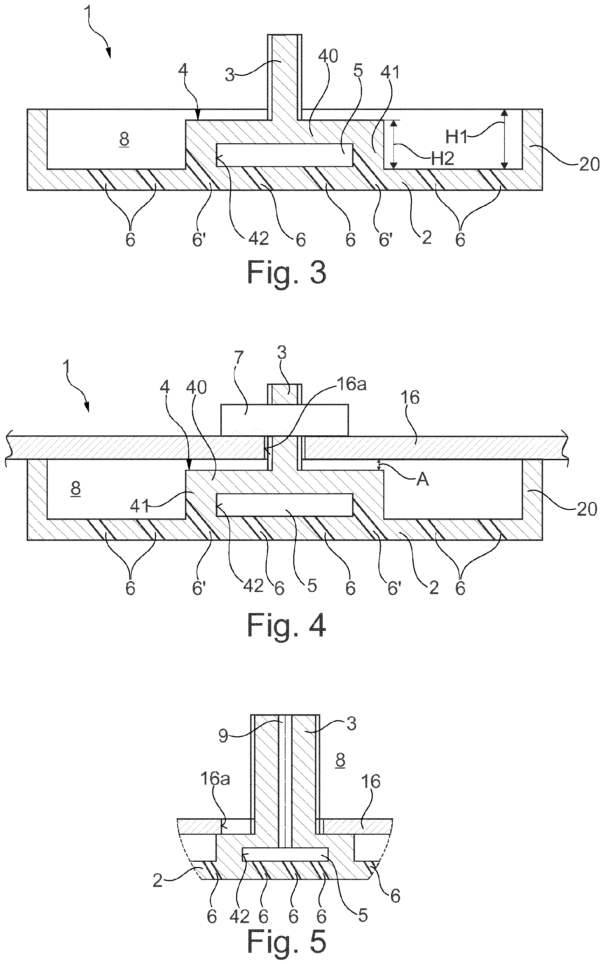

Die Brennkammer umfasst ferner eine äußere, kalte Brennkammerwand 16. Am Inneren der äußeren, kalten Brennkammerwand 16 sind eine Vielzahl von Brennkammerschindel-Anordnungen 1 angeordnet. Diese Brennkammerschindel-Anordnungen 1 sind in Fig. 2 schematisch dargestellt und im Detail aus den Figuren 3 und 4 ersichtlich.

Ferner sind nur mehrere Mischluftlöcher 17 vorgesehen, um Luft in das Innere der Brennkammer 115 zuzuführen.

Wie aus Fig. 3 ersichtlich ist, umfasst jede Brennkammerschindel-Anordnung 1 eine Brennkammerschindel 2, einen Gewindebolzen 3 und einen Grundkörper 4. Der Grundkörper 4 verbindet den Gewindebolzen 3 mit der Brennkammerschindel 2.

Wie in Fig. 3 gezeigt, sind die Brennkammerschindel 2, der Gewindebolzen 3 und der Grundkörper 4 einstückig aus dem gleichen Material hergestellt.

In der Brennkammerschindel 2 sind eine Vielzahl von Effusionskühllöchern 6 vorgesehen, um die Brennkammerschindel 2, welche unmittelbar den Brennraum 115 begrenzt, zu kühlen.

Wie weiter aus Fig. 3 ersichtlich ist, ist zwischen dem Grundkörper 4 und der Brennkammerschindel 2 ein Hohlraum 5 vorgesehen. Der Grundkörper 4 umfasst eine Plattform 40 und einen Verbindungsbereich 41. Die Plattform 40 ist eine ebene Fläche, auf welcher der Gewindebolzen 3 angeordnet ist. Der Gewindebolzen 3 ist vorzugsweise mittig auf der Plattform 40 angeordnet.

Der Hohlraum 5 ist über zwei Durchgangsöffnungen 42, welche senkrecht zur Darstellungsebene von Fig. 3 liegen, mit der rückwärtigen Umgebung 8 der Brennkammerschindel 2 verbunden. Somit kann Kühlluft aus der rückwärtigen Umgebung 8 über die Durchgangsöffnung 42 in den Hohlraum 5 und von dort in die unter dem Grundkörper 4 angeordneten Effusionskühllöcher 6 strömen.

Ein Querschnitt der Durchgangsöffnungen 42 ist dabei deutlich größer als eine Summe aller Querschnitte der Effusionskühllöcher 6 unterhalb des Grundkörpers 4. Dadurch wird eine Drosselung der Kühlluft bis zum Einströmquerschnitt der Effusionskühllöcher 6 vermieden.

Der Grundkörper 4 weist somit im Wesentlichen die Form einer Brücke auf, welche einen Teilbereich der Rückseite der Brennkammerschindel 2 überspannt.

Wie weiter aus Fig. 3 ersichtlich ist, sind auch zwei Effusionskühllöcher 6' teilweise im Verbindungsbereich 41 des Grundkörpers 4 gebildet. Dadurch wird die Wärmeleitung von der Brennkammerschindel 2 über den Verbindungsbereich 41 in den Grundkörper unterbunden oder zumindest reduziert.

Die Brennkammerschindel 2 weist ferner einen Schindelrand 20 auf, welcher umlaufend vorgesehen ist. Der Schindelrand 20 steht dabei von einer Rückseite der Brennkammerschindel 2 mit einer ersten Höhe H1 vor. Wie weiter aus Fig. 3 ersichtlich ist, ist eine zweite Höhe H2 des Grundkörpers 4 dabei kleiner als die erste Höhe H1. Dadurch kommt, wie in Fig. 4 im montierten Zustand gezeigt, die Plattform 40 nicht in direkten Kontakt mit der äußeren Brennkammerwand 16. Somit ist ein Abstand A zwischen der Plattform 40 und der Innenseite der äußeren Brennkammerwand 16 vorhanden. Dadurch kann auch die Plattform 40 durch Umströmen der Kühlluft auch oben gekühlt werden. Insbesondere kann dadurch auch der Gewindebolzen 3 gekühlt werden, sodass verhindert werden kann, dass ein zu hoher Temperaturanstieg am Gewindebolzen 3 auftritt, wodurch ein Kriechen des Materials des Gewindebolzens 3 vermieden wird.

Der Abstand A ermöglicht ferner, dass der Schindelrand 20 in dichtender Weise an die Innenseite der Brennkammerwand 16 anliegt.

Der Gewindebolzen 3 ist durch eine Öffnung 16a in der äußeren Brennkammerwand 16 hindurchgesteckt.

Wie in Fig. 4 gezeigt, wird der Gewindebolzen 3 mittels einer Mutter 7 gegen die äußere Brennkammerwand 16 verschraubt. Durch den Hohlraum 5 ist es ferner möglich, dass die gesamte Fläche der Brennkammerschindel 2 mit Effusionskühllöchern 6 versehen wird und so eine optimale Kühlung der Brennkammerschindel 2 ermöglicht wird. Im Stand der Technik waren bisher die Bereiche, an denen die Gewindebolzen 4 integraler Bestandteil der Schindel 2 waren oder aufgeschweißt waren, nicht kühlbar. Somit kann auch eine ungleiche Temperaturverteilung an der Brennkammerschindel 2 vermieden werden, wodurch eine Maßgenauigkeit der Brennkammerschindel-Anordnung weiter verbessert wird.

Somit kann insbesondere eine Lebensdauer der Brennkammerschindel-Anordnung signifikant verbessert werden. Da in diesem Ausführungsbeispiel die Brennkammerschindel-Anordnung ein einstückiges Bauteil aus gleichem Material ist, wird vorzugweise eine additive Fertigung zur Herstellung der Brennkammerschindel-Anordnung vorgesehen. Dadurch können zusätzlich Komponenten vermieden werden, was eine weitere Kosteneinsparung ermöglicht und insbesondere auch eine einfachere Montage ermöglicht.

Fig. 5 zeigt schematisch eine weitere Brennkammerschindel-Anordnung. In Fig. 5 ist im Detail nur der Grundkörper 4 mit Gewindebolzen 3 und Hohlraum 5 dargestellt.

Wie in der Brennkammerschindel-Anordnung von Fig.4 ist eine Vielzahl von Effusionskühllöchern 6 unterhalb des Grundkörpers 4 vorgesehen. Dabei sind keine Effusionskühllöcher 6 im Verbindungsbereich 41 zwischen der Plattform 40 und der Brennkammerschindel 2 vorgesehen. Im Unterschied zur Brennkammerschindel-Anordnung von Fig.4 berührt bei der Brennkammerschindel-Anordnung von Fig.5 die Plattform 40 die Innenseite der Brennkammerwand 16. Ferner weist der Bolzen 3 eine Durchgangsöffnung 9 auf, welche bis zum Hohlraum 5 reicht. Somit ergibt sich noch eine zusätzliche Möglichkeit zur Kühlung des Gewindebolzens 3. Die Durchgangsöffnung 9 ist dabei mittig im Gewindebolzen 3 angeordnet. Weiterhin kann durch den direkten Kontakt zwischen der Plattform 40 und der Innenseite der Brennkammerwand 16 auch eine Wärmeleitung von der Plattform 40 auf die kühlere Brennkammerwand 16 erfolgen, sodass eine noch bessere Kühlung der Plattform 40 und damit des Grundkörpers 4 möglich wird.

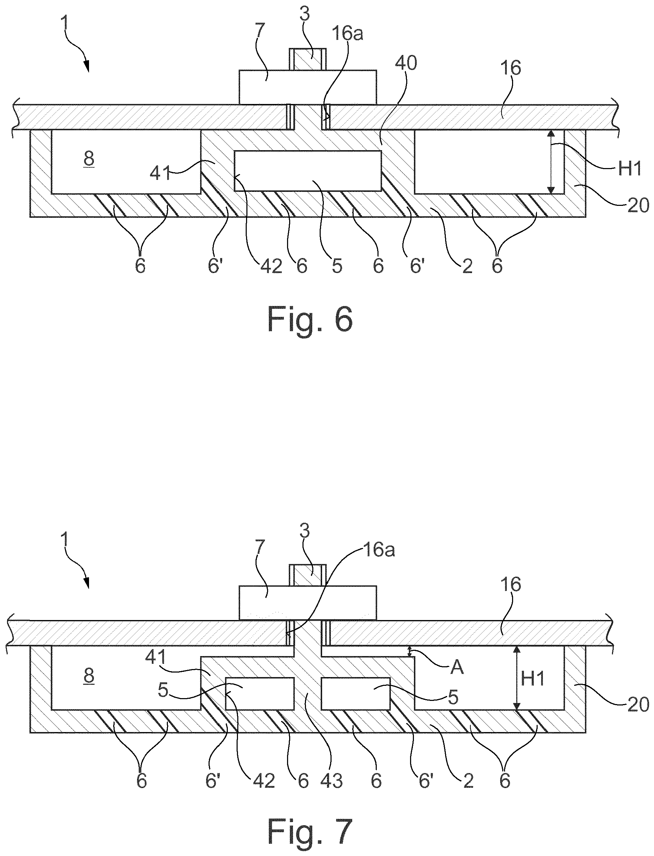

Fig. 6 zeigt eine weitere Brennkammerschindel-Anordnung 1 die Wesentlichen der Brennkammerschindel-Anordnung von Fig.4 entspricht, mit dem Unterschied, dass die Plattform 40 die Innenseite der äußeren Brennkammerwand 16 berührt. Dadurch wird eine Wärmeübertragung mittels Wärmeleitung von der Plattform 40 auf die Brennkammerwand 16 möglich. Ferner kann die durch die Mutter-Bolzenverbindung aufgebrachte Vorspannkraft innerhalb der Brücke aufgenommen werden und wirkt nicht direkt auf die Verbindungsbereiche 41, welche funktionsbedingt eine höhere Temperatur aufweisen können. Eine erste Höhe H1 des Schindelrandes 20 ausgehend von der Rückseite der Brennkammerschindel weist die gleiche Höhe wie die Plattform 40 auf. Dadurch kann im montierten Zustand die Plattform 40 die Innenseite der Brennkammerwand 16 berühren.

Fig. 7 zeigt eine Brennkammerschindel-Anordnung 1 die im Wesentlichen der Brennkammerschindel-Anordnung von Fig.4 entspricht, wobei zusätzlich noch der Grundkörper 4 eine mittige Abstützung 43 umfasst. Die mittige Abstützung 43 erhöht insbesondere die Stabilität unterhalb des Gewindebolzens 3.

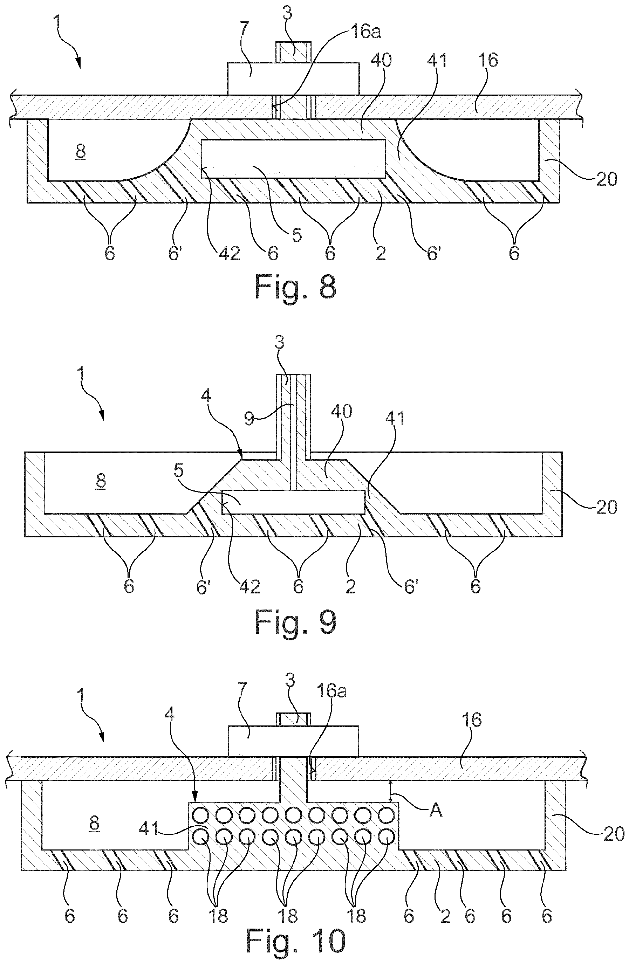

Fig. 8 zeigt eine Brennkammerschindel-Anordnung 1 die im Wesentlichen der Brennkammerschindel-Anordnung von Fig.6 entspricht, wobei der Verbindungsbereich 41 hier festigkeitstechnisch günstig mit tangentialen Übergängen ausgebildet ist.

Fig. 9 zeigt eine weitere Brennkammerschindel-Anordnung bei der der Verbindungsbereich 41 sich verjüngend ausgebildet ist. Ferner ist im Gewindebolzen 3 eine zentrale Durchgangsöffnung 9 angeordnet, wie in der Brennkammerschindel-Anordnung von Fig. 5.

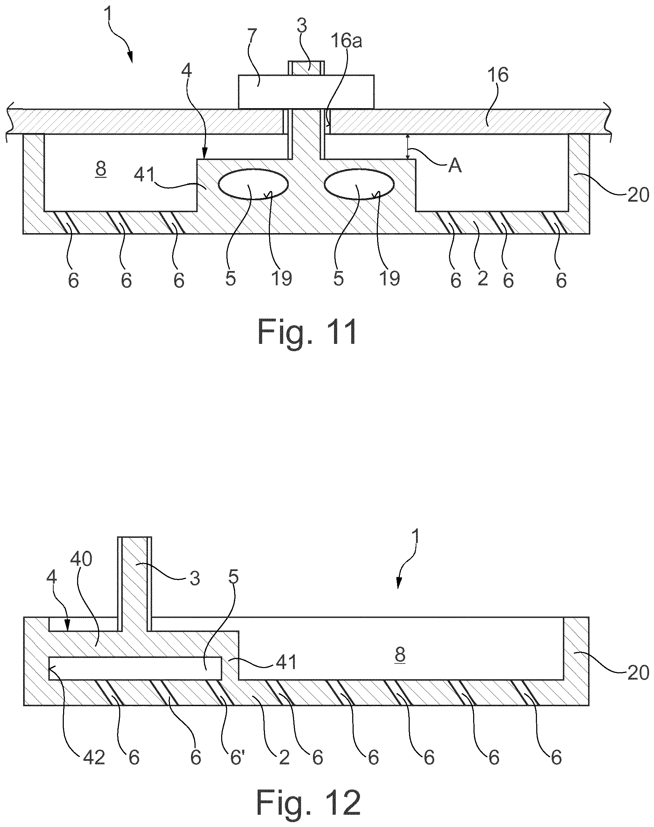

Die Figuren 10 und 11 zeigen weitere Brennkammerschindel-Anordnungen, wobei im Beispiel von Fig. 10 eine Vielzahl von kleinen Luftöffnungen 18 vorgesehen sind, welche im Verbindungsbereich 41 ausgebildet sind und in den Hohlraum 5 reichen. Beim Beispiel von Fig. 11 sind nur zwei größere Ovalöffnungen 19 vorgesehen.

Fig. 12 zeigt eine weitere Brennkammerschindel-Anordnung, wobei im Gegensatz zu den vorhergehenden Brennkammerschindel-Anordnungen, bei denen der Grundkörper 4 und der Gewindebolzen 3 im Wesentlichen mittig an der Brennkammerschindel 2 angeordnet waren, der Grundkörper 4 und der Gewindebolzen 3 an einem Rand der Brennkammerschindel, unmittelbar angrenzend an den Schindelrand 20, angeordnet sind. Es sei darauf hingewiesen, dass die äußere Fläche des Grundkörpers 4 bevorzugt auch bündig mit dem Schindelrand 20 sein kann.

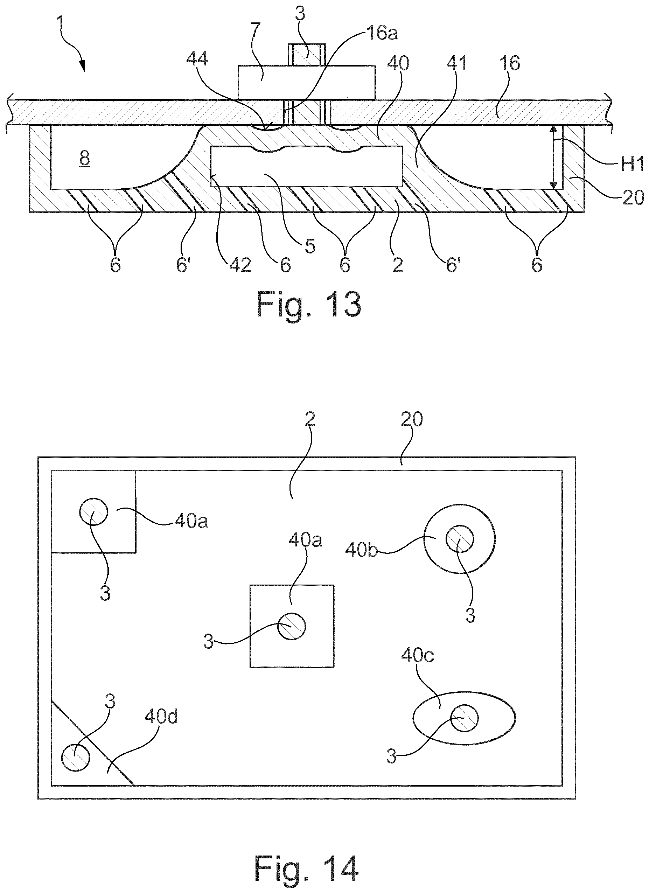

Fig. 13 zeigt eine Brennkammerschindel-Anordnung gemäß einem Ausführungsbeispiel der Erfindung. Das Ausführungsbeispiel entspricht im Wesentlichen der in Fig. 8 gezeigten Brennkammerschindel-Anordnung, wobei die Plattform eine vollständig um den Gewindebolzen 3 herum verlaufende Vertiefung 44 aufweist. Wie in Fig. 13 gezeigt, ist eine Höhe der Plattform 40 gleich einer Höhe H1 des Schindelrandes 20. Somit liegt im montierten Zustand die äußere Brennkammerwand 16 auf der Plattform 40 auf. Durch die Vertiefung 44 kann eine verbesserte Steifigkeit der Plattform 40 erreicht werden. Ferner ist durch den Kontakt zwischen Teilbereichen der Plattform 40 und der Brennkammerwand 16 eine verbesserte Aufnahme einer Vorspannkraft der Mutter-BolzenVerbindung möglich. Ein Übergang der Vertiefung 44 zu den benachbarten Flächen an der Plattform 40 ist dabei kantenfrei ausgeführt. Somit ist die Plattform 40 nicht als ebene Fläche ausgebildet, sondern weist die um den Gewindebolzen 3 herum verlaufende Vertiefung 44 auf, wodurch es insbesondere auch möglich ist, dass ein Fuß des Gewindebolzens 3 mit einem vorbestimmten Radius in die Vertiefung 44 übergeht, wodurch der Gewindebolzen 3 stabiler wird.

Fig. 14 zeigt im Detail nochmal verschiedene geometrische Ausgestaltungen des Grundkörpers 4 sowie der Anordnungsposition an der Rückseite der Brennkammerschindel 2. Der Grundkörper 4 kann eine eckige Plattform 40a oder eine runde Plattform 40b oder eine ovale Plattform 40c oder eine dreieckige Plattform 40d aufweisen. Der Grundkörper 4 kann dabei an Ecken der Brennkammerschindel 2 angeordnet sein und unmittelbar mit einem Schindelrand 20 in Kontakt sein oder mittig oder an einer beliebigen Position, wie beispielsweise die beiden Grundkörper 40b und 40c.

Zu allen beschriebenen Brennkammerschindel-Anordnungen sei angemerkt, dass ein Zuströmquerschnitt zum Hohlraum 5 immer gleich oder größer sein sollte als eine Summe aller Effusionskühllöcher 6, welche unterhalb des Grundkörpers 4 angeordnet sind. Dadurch wird eine Drosselung der Strömung an den Effusionskühllöchern 6 unterhalb des Grundkörpers 4 vermieden. Die geometrische Form der Durchgangsöffnungen 4, welche die Verbindung von der rückwärtigen Umgebung 8 der Brennkammerschindel 2 zum Hohlraum 5 herstellen, kann dabei beliebig sein. Es kann nur eine große Öffnung vorgesehen sein oder mehrere mittelgroße oder kleine Öffnungen.

Erfindungsgemäß kann somit ein ungekühlter Bereich unterhalb des Gewindebolzens 3, welcher zur Befestigung der Brennkammerschindel 2 notwendig ist, vermieden werden. Zum zusätzlichen Kühlen können an den Verbindungsbereichen 41 ebenfalls Kühlöffnungen vorgesehen werden und/oder die Plattform 40 kann in Kontakt mit der umgebenden Brennkammerwand 16 gebracht oder umströmt werden. Die Verbindungsbereiche 41 können auch integral mit dem Schindelrand 20 gebildet sein.

Eine Fläche der Plattform 40 ist ferner bevorzugt mindestens doppelt so groß wie ein Durchmesser des Gewindebolzens 3. Dadurch kann ein Wärmefluss hin zu dem stressempfindlichen Gewindebolzen 3 minimiert werden und andererseits auch eine minimale Flexibilität der Aufhängung gewährleistet werden, da sich die Plattform 40 während des Fixiervorgangs ggf. etwas verformen kann.

Auch weist vorzugsweise der Verbindungsbereich 41 eine gesamte Querschnittsfläche auf, welche mindestens so groß ist wie ein Durchmesser des Gewindebolzens 3.

### Bezugszeichenliste

- 1: Brennkammerschindel-Anordnung
- 2: Brennkammerschindel
- 3: Gewindebolzen
- 4: Grundkörper
- 5: Hohlraum
- 6: Effusionskühllöcher
- 6': Effusionskühlloch im Verbindungsbereich
- 7: Mutter
- 8: Rückwärtige Umgebung der Brennkammerschindeln
- 9: Durchgangsöffnung im Gewindebolzen
- 11: Brennerachse
- 12: Brennkammerkopf
- 13: Hitzeschild
- 14: Brennerdichtung
- 15: Grundplatte
- 16: Äußere Brennkammerwand
- 16a: Öffnung in der äußeren Brennkammerwand
- 17: Mischluftlöcher
- 18: kleinere Luftöffnungen
- 19: größere Kühlungsöffnung im Verbindungsbereich
- 20: Schindelrand
- 40: Plattform
- 40a: Eckige Plattform
- 40b: Runde Plattform
- 40c: Ovale Plattform
- 40d: Dreieckige Plattform
- 41: Verbindungsbereich
- 42: Durchgangsöffnungen
- 43: Mittige Abstützung
- 44: Vertiefung

- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Kerntriebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus

- A: Abstand
- H1: erste Höhe
- H2: zweite Höhe

## Patentansprüche

1. Brennkammerschindel-Anordnung (1) einer Gasturbine, umfassend
- eine Brennkammerschindel (2) mit einem Schindelrand (20),
- wenigstens einen Gewindebolzen (3), eingerichtet zur Befestigung der Brennkammerschindel (2), und
- einen Grundkörper (4), welcher den Gewindebolzen (3) mit der Brennkammerschindel (2) verbindet,
- wobei der Grundkörper (4) eine Plattform (40) und einen Verbindungsbereich (41) umfasst, welcher die Plattform (40) mit der Brennkammerschindel (2) verbindet,
- wobei der Gewindebolzen (3) an der Plattform (40) angeordnet ist,
- wobei ein Hohlraum (5) zwischen der Plattform (40) und der Brennkammerschindel (2) ausgebildet ist, und
- wobei die Plattform (40) nicht als ebene Fläche ausgebildet ist und eine um den Gewindebolzen (3) herum verlaufende Vertiefung (44) aufweist,
- wobei der Schindelrand (20) ausgehend von der Rückseite der Brennkammerschindel eine gleiche Höhe wie der Grundkörper (4) aufweist.

2. Brennkammerschindel-Anordnung nach Anspruch 1, ferner umfassend eine Vielzahl von Effusionskühllöchern (6), wobei wenigstens ein Effusionskühlloch (6) in einem Bereich der Brennkammerschindel (2) unterhalb des Grundkörpers (4) angeordnet ist, wobei der Hohlraum (5) mittels wenigstens einer Durchgangsöffnung (42) mit einer Umgebung (8) der Brennkammerschindel (2) verbunden ist.

3. Brennkammerschindel-Anordnung nach Anspruch 2, wobei eine Summe aller Querschnitte der Durchgangsöffnung (42) im Grundkörper (4) größer oder gleich einer Summe aller Effusionskühllöcher (6) im Bereich unterhalb des Grundkörpers (4) ist.

4. Brennkammerschindel-Anordnung nach einem der vorhergehenden Ansprüche, wobei die Brennkammerschindel (2), der Grundkörper (4) und der Gewindebolzen (3) einstückig aus dem gleichen Material hergestellt sind.

5. Brennkammerschindel-Anordnung nach Anspruch 4, wobei die Brennkammerschindel-Anordnung ein additiv hergestelltes Bauteil ist.

6. Brennkammerschindel-Anordnung nach einem der vorhergehenden Ansprüche, wobei der Gewindebolzen (3) eine Durchgangsöffnung (9) aufweist, welche bis zum Hohlraum (5) reicht.

7. Brennkammerschindel-Anordnung nach einem der vorhergehenden Ansprüche, wobei der Hohlraum (5) von mehreren Seiten mit der Umgebung (8) verbunden ist.

8. Brennkammerschindel-Anordnung nach einem der vorhergehenden Ansprüche, wobei eine Gesamtfläche der Plattform (40) des Grundkörpers (4) mindestens zweimal so groß ist wie ein Durchmesser des Gewindebolzens (3).

9. Brennkammerschindel-Anordnung nach einem der vorhergehenden Ansprüche, ferner umfassend Effusionskühllöcher (6'), welche zumindest teilweise im Verbindungsbereich (41) des Grundkörpers (4) ausgebildet sind.

## Claims

1. Combustion chamber tile arrangement (1) of a gas turbine, comprising
- a combustion chamber tile (2) with a tile edge (20),
- at least one threaded bolt (3) configured for fastening the combustion chamber tile (2), and
- a main body (4) which connects the threaded bolt (3) to the combustion chamber tile (2),
- wherein the main body (4) comprises a platform (40) and a connecting region (41) which connects the platform (40) to the combustion chamber tile (2),
- wherein the threaded bolt (3) is arranged on the platform (40),
- wherein a cavity (5) is formed between the platform (40) and a combustion chamber tile (2), and
- wherein the platform (40) is not formed as a planar surface and has a depression (44) extending around the threaded bolt (3),
- wherein the tile edge (20) has, proceeding from the rear side of the combustion chamber tile, the same height as the main body (4).

2. Combustion chamber tile arrangement according to Claim 1, furthermore comprising a multiplicity of effusion cooling holes (6), wherein at least one effusion cooling hole (6) is arranged in a region of the combustion chamber tile (2) below the main body (4), wherein the cavity (5) is connected by means of at least one passage opening (42) to surroundings (8) of the combustion chamber tile (2) .

3. Combustion chamber tile arrangement according to Claim 2, wherein a sum of all cross sections of the passage opening (42) in the main body (4) is greater than or equal to a sum of all effusion cooling holes (6) in the region below the main body (4).

4. Combustion chamber tile arrangement according to any of the preceding claims, wherein the combustion chamber tile (2), the main body (4) and the threaded bolt (3) are produced as a single piece from the same material.

5. Combustion chamber tile arrangement according to Claim 4, wherein the combustion chamber tile arrangement is an additively manufactured component.

6. Combustion chamber tile arrangement according to any of the preceding claims, wherein the threaded bolt (3) has a passage opening (9) which extends as far as the cavity (5).

7. Combustion chamber tile arrangement according to any of the preceding claims, wherein the cavity (5) is connected on multiple sides to the surroundings (8).

8. Combustion chamber tile arrangement according to any of the preceding claims, wherein a total area of the platform (40) of the main body (4) is at least twice a diameter of the threaded bolt (3).

9. Combustion chamber tile arrangement according to any of the preceding claims, furthermore comprising effusion cooling holes (6') which are formed at least partially in the connecting region (41) of the main body (4).

## Revendications

1. Ensemble formant bardeau de chambre de combustion (1) d'une turbine à gaz, comprenant
- un bardeau de chambre de combustion (2) doté d'un bord de bardeau (20),
- au moins un boulon fileté (3), aménagé pour fixer le bardeau de chambre de combustion (2), et
- un corps de base (4) qui relie le boulon fileté (3) au bardeau de chambre de combustion (2),
- le corps de base (4) comprenant une plate-forme (40) et une zone de jonction (41) qui relie la plate-forme (40) au bardeau de chambre de combustion (2),
- le boulon fileté (3) étant disposé sur la plate-forme (40),
- une cavité (5) étant réalisée entre la plate-forme (40) et le bardeau de chambre de combustion (2), et
- la plate-forme (40) n'étant pas réalisée sous forme de surface plane et présentant un creux (44) s'étendant autour du boulon fileté (3),
- le bord de bardeau (20) présentant la même hauteur que le corps de base (4) en partant de la face arrière du bardeau de chambre de combustion.

2. Ensemble formant bardeau de chambre de combustion selon la revendication 1, comprenant en outre une pluralité de trous de refroidissement par effusion (6), au moins un trou de refroidissement par effusion (6) étant disposé dans une zone du bardeau de chambre de combustion (2) au-dessous du corps de base (4), la cavité (5) étant reliée à un environnement (8) du bardeau de chambre de combustion (2) au moyen d'au moins une ouverture traversante (42).

3. Ensemble formant bardeau de chambre de combustion selon la revendication 2, dans lequel une somme de toutes les sections transversales de l'ouverture traversante (42) dans le corps de base (4) est supérieure ou égale à une somme de tous les trous de refroidissement par effusion (6) dans la zone au-dessous du corps de base (4) .

4. Ensemble formant bardeau de chambre de combustion selon l'une quelconque des revendications précédentes, dans lequel le bardeau de chambre de combustion (2), le corps de base (4) et le boulon fileté (3) sont fabriqués d'un seul tenant du même matériau.

5. Ensemble formant bardeau de chambre de combustion selon la revendication 4, dans lequel l'ensemble formant bardeau de chambre de combustion est un composant fabriqué de manière additive.

6. Ensemble formant bardeau de chambre de combustion selon l'une quelconque des revendications précédentes, dans lequel le boulon fileté (3) présente une ouverture traversante (9) qui s'étend jusqu'à la cavité (5).

7. Ensemble formant bardeau de chambre de combustion selon l'une quelconque des revendications précédentes, dans lequel la cavité (5) est reliée à l'environnement (8) sur plusieurs côtés.

8. Ensemble formant bardeau de chambre de combustion selon l'une quelconque des revendications précédentes, dans lequel une surface totale de la plate-forme (40) du corps de base (4) est au moins deux fois plus grande qu'un diamètre du boulon fileté (3).

9. Ensemble formant bardeau de chambre de combustion selon l'une quelconque des revendications précédentes, comprenant en outre des trous de refroidissement par effusion (6') qui sont réalisés au moins en partie dans la zone de jonction (41) du corps de base (4).
